# DEMANDE DE BREVET EUROPEEN

(11) **EP 1 837 219 A2**
(43) Date de publication de la demande: **26.09.2007**
(21) Numéro de dépôt: 07112319.4
(22) Date de dépôt: 25.04.2000
(51) Int. Cl.: B60J 1/16

(54) **Dispositif d'obturation d'une baie ménagée dans la carrosserie d'un véhicule, à élément(s) d'étanchéité et/ou de rigidification, et procédé de fabrication correspondant.**

(30) Priorité: 27.04.1999 FR 9905560
(62) Demande divisionnaire de: 00460030.0
(71) Demandeur: WAGON SAS, 79302 Bressuire Cédex (FR)
(72) Inventeur: Cousson, François, 79430 La Chapelle Saint Laurent (FR)
(74) Mandataire: Bioret, Ludovic

(57) **Abrégé**

Dispositif d'obturation d'une baie ménagée dans la carrosserie d'un véhicule, à élément(s) d'étanchéité et/ou de rigidification, et procédé de fabrication correspondant.

L'invention concerne un dispositif d'obturation d'une baie ménagée dans la carrosserie d'un véhicule, du type comprenant une partie fixe (12, 13) destiné à être rapporté sur ladite carrosserie et une partie mobile (14) par rapport à ladite partie fixe (12, 13), pouvant venir obturer ou libérer une ouverture (11) ménagée dans ledit ensemble fixe (12, 13), ladite partie mobile (14) se trouvant dans le même plan que ladite partie fixe (12, 13) lorsque la partie mobile (14) se trouve en position d'obturation.

Selon l'invention, ladite partie fixe (12, 13) présente au moins un élément rigide et solidaire de la partie fixe (22, 41) s'étendant légèrement à l'intérieur de ladite ouverture (11), ledit élément rigide et solidaire de la partie fixe (22, 41) formant une surface d'appui pour ladite partie mobile (14) lorsque celle-ci est en position d'obturation,
ladite partie fixe (12, 13) comprenant un élément rigide de protection et/ou de finition (41), formé sur la face de ladite partie fixe (12, 13) correspondant à l'extérieur du véhicule, et formant une surface d'appui pour ladite partie mobile (14) lorsque celle-ci est en position d'obturation..

## Description

Le domaine de l'invention est celui des baies de véhicule. Plus précisément, l'invention concerne les dispositifs d'obturation d'une baie ménagée dans la carrosserie d'un véhicule, comprenant une partie fixe et une partie mobile. Plus précisément encore, l'invention concerne de tels dispositifs d'obturation présentant un aspect affleurant sur la carrosserie, et pourvus d'au moins un panneau mobile.

Un dispositif comprenant toutes les caractéristiques du préambule de la revendication 1 est connu du document US 4 850 139.

Classiquement, pour obturer la baie d'un véhicule, qu'il s'agisse d'une automobile, d'un véhicule utilitaire, d'un camion, d'un autobus ou d'un wagon de chemin de fer, on rapporte une glace, maintenue par un cadre de liaison. Ce dernier présente une partie interne et une partie externe, qui viennent pincer simultanément les bords de la glace et de l'ouverture ménagée dans la carrosserie, avec une garniture d'étanchéité.

Une autre technique est décrite dans les documents de brevets EP-0 778 168 et EP-0 857 844, au nom du même titulaire que la présente demande de brevet. Le dispositif d'obturation (appelé par la suite "baie flush") présenté dans ces documents comprend une partie fixe et une partie mobile par rapport à la partie fixe. La partie mobile est reliée à la partie fixe par des éléments fonctionnels qui assurent la mobilité requise et qui sont rapportés sur la face de la partie fixe tournée vers l'intérieur du véhicule.

Une technique avantageuse de réalisation de la partie fixe est décrite dans le document de brevet FR-98 11898, et illustrée de façon simplifiée en figure 1.

Selon cette technique, la partie fixe est constituée d'un premier élément 12 en forme générale de C (dont l'intérieur définit au moins partiellement l'ouverture 11 ménagée dans la baie), qui porte des rails de coulissement 16₁ et 16₂ de la partie mobile 14, s'étendant parallèlement, dans le prolongement des deux extrémités du C, et un second élément 13 venant prendre place sur ces rails 16₁ et 16₂, et définissant le quatrième côté de l'ouverture 11.

L'élément 12 en forme de C peut indifféremment être réalisé en une ou plusieurs parties. Par ailleurs, la forme générale de la partie mobile est ici considérée, par simplification, comme étant essentiellement rectangulaire, mais il est clair qu'elle peut être de forme quelconque, en fonction notamment de contraintes techniques et/ou esthétiques.

Lorsque la partie mobile 11 est en position d'obturation, l'ensemble du dispositif se trouve sensiblement dans un plan unique. La partie mobile 11 est maintenue efficacement par les deux rails 16₁ et 16₂, pour ses deux côtés correspondant aux extrémités du C.

En revanche, du fait de la légère flexibilité des matériaux, on constate que, lorsque l'on applique une poussée suffisante, la partie d'extrémité 17 du panneau mobile, venant jouxter la partie intermédiaire du C, peut se déplacer légèrement vers l'intérieur du véhicule. Une telle situation peut par exemple se rencontrer lors d'un nettoyage à l'aide d'un jet d'eau à haute pression. Lorsque celui-ci est dirigé sur la portion d'extrémité du panneau mobile, il se déplace légèrement, et l'eau pénètre à l'intérieur du véhicule.

Cette situation peut également poser des problèmes de sécurité, une personne mal intentionnée pouvant tenter d'introduire un objet, ou d'ouvrir la porte du véhicule, en forçant sur le panneau mobile.

Le problème de l'étanchéité d'un tel dispositif d'obturation se pose, par ailleurs, de façon plus générale. En effet, la partie fixe et la partie mobile peuvent ne pas être parfaitement jointes, et il existe généralement un certain jeu entre ces deux parties, par lequel l'eau peut pénétrer.

En outre, de tels jeux sont peu esthétiques.

L'utilisation de joints a été envisagée. Une mise en oeuvre particulière est notamment proposée dans la demande de brevet FR- 98 10457. Toutefois, à nouveau, cette solution n'est pas satisfaisante, dans certaines situations, notamment sur le plan de l'esthétique.

Bien que, pour simplifier l'exposé, ces inconvénients ont été décrits dans le cadre d'un mode de réalisation particulier, il est clair qu'il se pose dans les cas où l'on souhaite mettre en oeuvre une "baie flush".

L'invention a notamment pour objectif de pallier ces différents inconvénients de l'état de l'art.

Plus précisément, un objectif de l'invention est de fournir un dispositif d'obturation du type "baie flush", qui présente de bonnes qualités d'étanchéité, lorsque la partie mobile est en position d'obturation.

Un autre objectif de l'invention est de fournir un tel dispositif d'obturation, présentant de bonnes qualités esthétiques, que la partie mobile soit en position ouverte ou en position fermée.

Encore un autre objectif de l'invention est de fournir un tel dispositif d'obturation, qui soit plus sûr, en empêchant, ou à tout le moins limitant, les tentatives d'effraction.

L'invention a également pour objectif de fournir un tel dispositif d'obturation qui soit simple, rapide et peu coûteux à fabriquer et à mettre en oeuvre.

Notamment, un objectif de l'invention est de fournir un tel dispositif d'obturation ne nécessitant ni la présence d'un nombre important d'éléments supplémentaires, ni d'opération de fabrication supplémentaire par rapport aux techniques connues.

De la même façon, un objectif de l'invention est de fournir un tel dispositif d'obturation, qui n'introduise aucune manipulation supplémentaire pour l'utilisateur.

Ces objectifs, ainsi que d'autres qui apparaîtront plus clairement par la suite sont atteints à l'aide d'un dispositif d'obturation d'une baie ménagée dans la carrosserie d'un véhicule, selon la revendication 1.

Comme on le verra plus précisément par la suite, cette technique permet notamment d'obtenir une amélioration de l'étanchéité et/ou de l'esthétique du véhicule, en particulier en empêchant tout déplacement intempestif, vers l'intérieur, de l'extrémité de la partie mobile, et/ou en formant un cadre protecteur.

Ainsi, ladite partie fixe comprend un élément rigide de protection et/ou de finition, formé sur la face de ladite partie fixe correspondant à l'extérieur du véhicule, et formant une surface d'appui pour ladite partie mobile lorsque celle-ci est en position d'obturation.

Tout en offrant un bon aspect esthétique, on améliore ainsi l'étanchéité du dispositif.

De façon préférentielle, ledit élément rigide de protection et/ou de finition forme un cadre autour de ladite ouverture.

Selon un autre aspect de l'invention, le dispositif d'obturation comprend avantageusement au moins un premier élément rigide d'accrochage formé sur la face de ladite partie fixe correspondant à l'intérieur du véhicule, et coopérant avec un second élément d'accrochage prévu à cet effet sur ladite partie mobile, lorsque cette dernière est en position d'obturation.

On obtient ainsi un mécanisme de verrouillage automatique de l'extrémité de la partie mobile dans le plan du dispositif, lorsque cette dernière est fermée.

De façon préférentielle, lesdits premier et second éléments d'accrochage viennent s'engrener l'une dans l'autre. En d'autres termes, ils forment un ensemble assimilable à un mécanisme pêne/gâche.

Selon un mode de réalisation avantageux, lesdits premier et second éléments d'accrochage réalisent un blocage selon un axe sensiblement vertical (blocage en Y), ledit second élément d'accrochage présentant un plan incliné venant s'inscrire dans un logement complémentaire défini par ledit premier élément d'accrochage.

Lorsque le mouvement de ladite partie mobile est guidé par deux rails parallèles, ledit premier élément rigide d'accrochage est avantageusement placé sur une portion (dite portion d'extrémité) de ladite partie mobile située entre les portions de ladite partie mobile portant lesdits rails.

Avantageusement, la mise en oeuvre de ce mécanisme est automatique (c'est-à-dire qu'il ne nécessite aucune manipulation supplémentaire), tant à l'ouverture qu'à la fermeture.

Ainsi, lorsque l'ouverture du dispositif entraîne un déplacement vers le bas de la partie mobile, on prévoit avantageusement que l'ouverture dudit logement est dirigée vers le bas.

De cette façon, le pêne vient prendre place automatiquement dans la gâche, lors de la fermeture. Il s'en dégage également automatiquement, à l'ouverture.

Les éléments rigides peuvent être réalisés et rapportés sur la partie fixe de toutes les façons adéquates. Selon un mode de réalisation avantageux, au moins un desdits éléments rigides est formé par moulage, lors de la fabrication de ladite partie fixe.

La fabrication ne nécessite ainsi aucun moyen supplémentaire, par rapport à la technique connue, si ce n'est, bien sûr, l'adaptation (une fois pour toute) du moule.

Avantageusement, lesdits éléments rigides et les rails de guidage de ladite partie mobile sont réalisés simultanément, également par moulage.

L'invention concerne également un procédé de fabrication d'un tel dispositif d'obturation d'une baie ménagée dans la carrosserie d'un véhicule selon la revendication 10.

De façon préférentielle, le ou lesdits éléments rigides sont formés par moulage.

D'autres caractéristiques et avantages de l'invention apparaîtront plus clairement à la lecture de la description suivante d'un mode de réalisation préférentiel, donné à titre de simple exemple illustratif et non limitatif, et des dessins annexés parmi lesquels :
- la figure 1, déjà commentée en préambule, illustre un dispositif d'obturation auquel l'invention peut avantageusement s'appliquer ;
- la figure 2 présente un dispositif d'obturation selon l'invention, mettant en oeuvre des moyens de blocage en Y;
- la figure 3 est une vue en coupe du dispositif d'obturation de la figure 2 ;
- la figure 4 illustre, également en coupe, la mise en oeuvre d'un cadre de protection et de finition.

Le dispositif d'obturation d'une baie selon l'invention est prévu pour équiper un véhicule. Il est destiné à être rapporté sur une ouverture réalisée sur la carrosserie du véhicule. Une telle ouverture peut être réalisée sur une paroi latérale du véhicule, le pavillon,... Elle peut être plane et incurvée de façon à suivre la carrosserie.

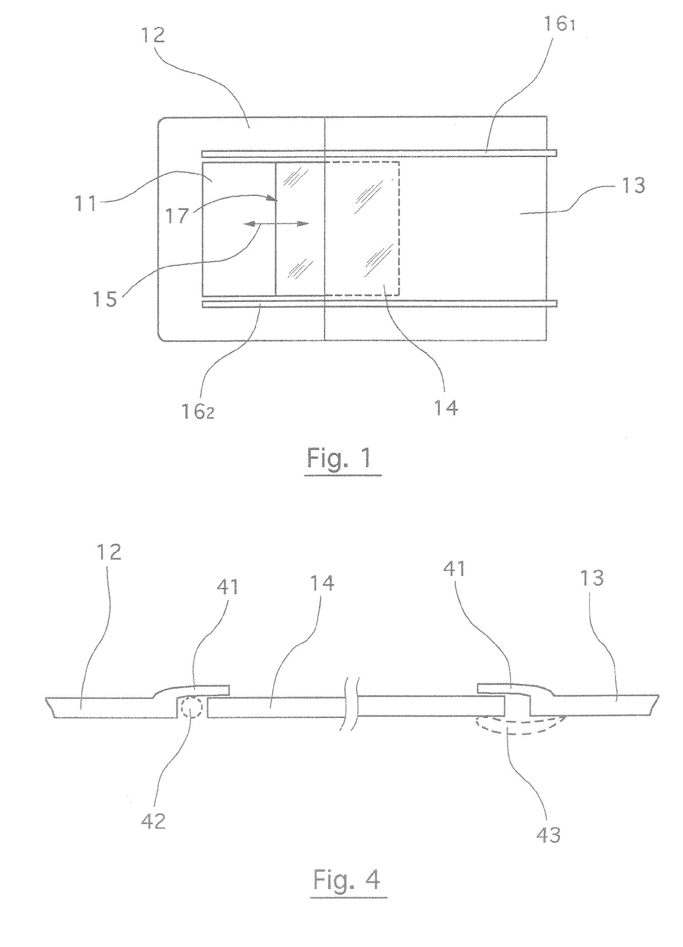

Ce dispositif d'obturation est par exemple du type décrit dans le document de brevet EP-0 857 844, et tel qu'illustré schématiquement par la figure 1.

Il comprend donc une partie fixe 12, 13, qui sera rapportée sur la carrosserie du véhicule, par exemple par collage. Une partie mobile 14, montée sur la partie fixe, permet de fermer ou de libérer une ouverture 11 définie dans cette partie fixe. Des rails 16₁ et 16₂, fixés (ou moulés) sur la face intérieure de la partie fixe, assurent le guidage de la partie mobile 14, celle-ci en coulissant le long de la partie fixe.

Avantageusement, le mouvement de la partie mobile 14 par rapport à la partie fixe 12, 13 est décomposée en deux déplacements indépendants :
- un déplacement perpendiculaire par rapport au plan formé par la partie fixe, permettant le passage d'une position fermée, et verrouillée, dans laquelle la partie mobile se trouve dans le même plan que la partie fixe, et obture l'ouverture, à une position de libération, dans laquelle la partie mobile est décalée dans un plan de coulissement, par rapport à la partie fixe, de façon à permettre le coulissement.
   Lors du passage de la position d'obturation à la position de libération, on notera que, dans le mode de réalisation particulier décrit par la suite, la partie mobile est légèrement décalée vers le bas, par rapport à l'ouverture 11 ;
- un déplacement 15 parallèle au plan formé par la partie fixe, dans le plan de coulissement.

Bien sûr, d'autres mouvements sont possibles. Par exemple, la partie mobile peut suivre une courbe selon laquelle les deux mouvements (verrouillage/déverrouillage et coulissement) sont liés.

Bien que dans l'exemple illustré en figure 1, la baie soit plane et rectangulaire, il est clair que l'invention s'applique également à tout autre type d'ouverture. Notamment, la glace 14 peut être bombée, incurvée et/ou d'une forme quelconque.

Par ailleurs, le dispositif de l'invention s'applique notamment aux parois latérales d'un véhicule. Cependant, il peut également être mis en oeuvre sur le pavillon d'un véhicule, et plus généralement en tout emplacement où cela serait souhaitable.

La glace 14 peut être en verre ou en un matériau transparent ou translucide adapté. Elle peut également être réalisée dans le même matériau que la carrosserie. On notera également qu'il est possible d'utiliser plusieurs glaces indépendantes pour obturer une baie (par exemple une glace se déplaçant vers la gauche et l'autre vers la droite). Le cas échéant, l'une des glaces peut être fixe.

Comme indiqué précédemment, l'invention propose une technique avantageuse pour améliorer l'étanchéité, la rigidité et/ou l'esthétique d'une "baie flush", consistant notamment à prévoir au moins un élément rigide solidaire de la partie fixe, et s'étendant légèrement vers l'intérieur de l'ouverture, pour coopérer avec la partie mobile, lorsque celle-ci se trouve en position fermée. Ces éléments rigides peuvent notamment comprendre, sur la face intérieure de la partie fixe, un élément d'accrochage, empêchant que la partie mobile puisse se déplacer vers l'intérieur du véhicule et/ou un élément formant un cadre, sur la face extérieure de la partie mobile.

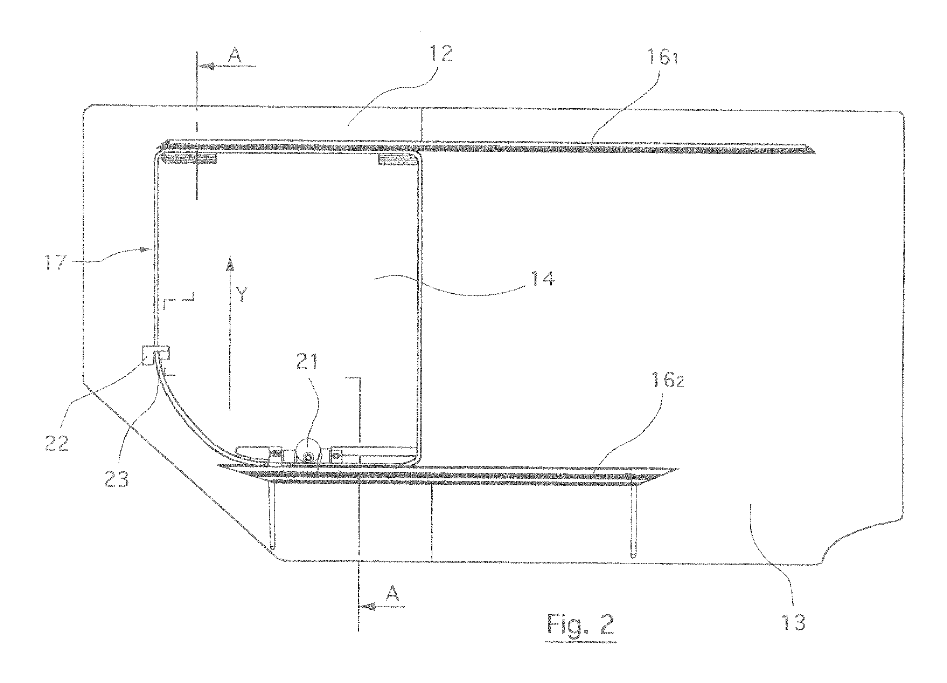

La figure 2 présente un mode de réalisation particulier de l'invention. Le dispositif d'obturation est vu du côté correspondant à l'intérieur du véhicule.

La partie fixe comprend un élément 12 en forme de C, portant les deux rails 16₁ et 16₂, et un élément sensiblement rectangulaire 13, rapporté sur les rails. La glace mobile 14 est montée coulissante sur les rails 16₁ et 16₂.

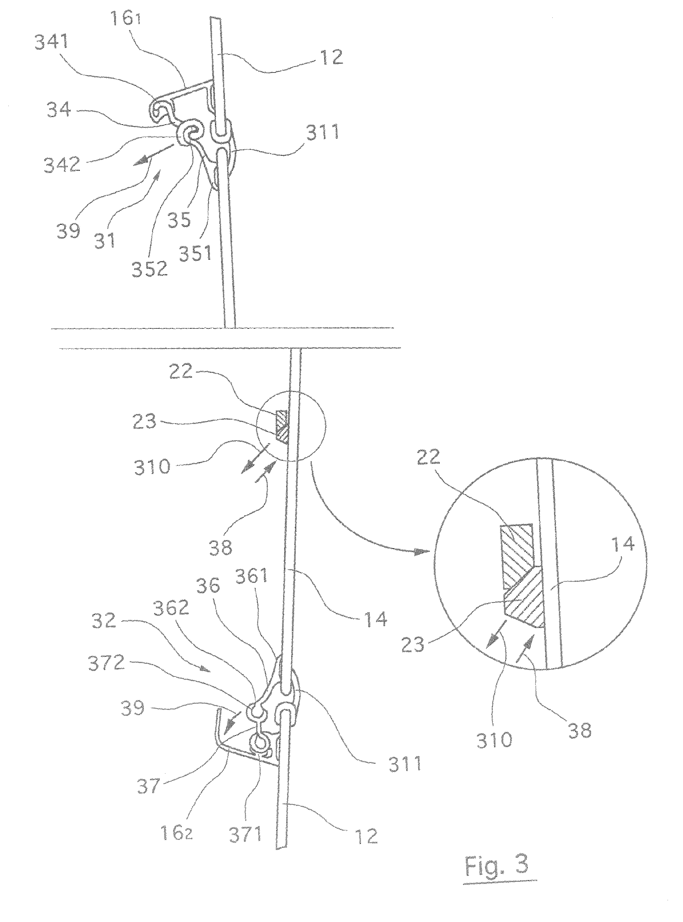

Le mécanisme correspondant apparaît plus clairement sur la figure 3, discutée par la suite.

Une poignée 21 de verrouillage est prévue. Elle prend appui sur le rail 16₂, pour décaler la glace mobile dans son plan de coulissement, et pour la ramener dans le plan d'obturation. Cette poignée est avantageusement de type rotatif, telle que décrite par exemple dans la demande de brevet FR-98 09315, au nom du même titulaire que la présente demande de brevet.

Les moyens de blocage de l'extrémité 17 de la glace mobile 14 comprennent, selon une caractéristique optionnelle de l'invention, un élément 22 solidaire de la partie fixe 12, dans lequel vient s'inscrire, lors de l'obturation, un élément complémentaire 23, solidaire de la glace mobile 14.

Ce mécanisme peut être assimilé à un verrou, l'élément 23 étant le pêne, et l'élément 22 définissant la gâche.

Dans le mode de réalisation illustré plus précisément par la figure 3, qui correspond à la section A-A de la figure 2, la glace 14 est solidarisée à ce cadre par des éléments de liaison 31 et 32, coopérant respectivement avec les rails 16₁ et 16₂.

Ces éléments de liaison permettent d'assurer le double mouvement (perpendiculaire et parallèle au plan de la carrosserie), comme expliqué précédemment.

La partie fixe 12 est donc munie d'un rail supérieur 16₁ et d'un rail inférieur 16₂, avec lesquels coopèrent les éléments de liaison 31 et 32.

L'élément de liaison supérieur 31 comprend un premier organe 34 et un second organe 35, reliés entre eux. Une extrémité 341 du premier organe 34 est montée en rotation sur le rail de guidage 16₁. En position d'obturation, cet organe 34 est sensiblement horizontal. Il se retrouve vertical en position de libération.

Le second organe 35 présente une première extrémité 351 fixée, par exemple par collage, à la glace 14. La seconde extrémité 352 est articulée sur la seconde extrémité 342 du premier organe 34. Ce second organe 35 reste sensiblement horizontal dans les deux positions, de façon à repousser la glace vers l'extérieur, en position de libération.

Ainsi, lorsque la glace est ouverte, elle se trouve suspendue à l'élément de liaison supérieur 31.

L'élément de liaison inférieur 32 comprend également, de façon similaire, deux organes 36 et 37 articulés entre eux à leurs extrémités respectives 362 et 372. L'autre extrémité 361 de l'organe 36 est montée à rotation sur le rail de coulissement 16₂. L'autre extrémité 371 de l'organe 37 est solidarisée à la glace 14.

En position d'obturation, l'organe 36 est sensiblement horizontal. Il passe pratiquement à la verticale en position de libération. L'organe 37 reste quant à lui sensiblement dans le même plan légèrement incliné par rapport à l'horizontale.

En conséquence, on comprend que le passage de la position d'obturation à la position de libération entraîne un léger décalage de la partie mobile vers le bas (suivant un axe Y). Inversement, le passage de la position de libération à la position d'obturation entraîne un léger décalage de la partie mobile vers le haut, pour venir s'inscrire dans l'ouverture 11.

Ce décalage est avantageusement exploité pour mettre en oeuvre l'invention. En effet, le mécanisme d'accrochage peut ainsi avantageusement former un blocage en Y (axe sensiblement vertical, selon lequel se fait le décalage pré-cité). L'élément 23 (formant pêne), solidaire de la partie mobile, vient progressivement en butée contre un plan incliné complémentaire formé par l'élément 22 solidaire de la partie fixe, lorsque la glace mobile 14 est ramenée dans le plan d'obturation, celle-ci remontant progressivement (flèche 38).

Inversement, lorsque l'on ouvre la glace, celle-ci passe du plan d'obturation au plan de coulissement. Se faisant, elle est légèrement abaissée (flèches 39). Le pêne 23 se dégage alors de son logement (flèche 310).

Sur cette figure 3, on a représenté un joint 311, qui fait avantageusement le tour complet de l'ouverture, selon la technique décrite dans la demande de brevet FR-98 10457, au nom du même titulaire que la présente demande de brevet.

Selon l'invention, et ainsi que cela est illustré par la figure 4, un tel joint peut être remplacé par un cadre rigide 41 s'étendant dans le prolongement de la partie fixe 12, 13. Ce cadre assure une fonction d'étanchéité, empêchant le passage de l'eau, et vient masquer le jeu entre la glace mobile et la partie fixe, tout en présentant un aspect esthétique avantageux.

Bien sûr, des moyens complémentaires d'étanchéité peuvent être prévus, tel qu'un joint 42 solidaire de la partie fixe 12, 13 ou du cadre 41, et masqués par ce dernier, et/ou un joint 43 solidaire de la partie mobile.

Les éléments 23 et/ou 41 formés sur la partie fixe peuvent être rapportés de différentes manières (collage, soudage,...). Selon un mode de fabrication avantageux, ces éléments sont réalisés directement dans la masse, par moulage, lors de la fabrication de la partie fixe. Il en est avantageusement de même pour les rails.

Ainsi, aucune étape supplémentaire, ni aucun surcoût important, n'apparaît lors de la fabrication de la pièce fixe. De plus, on obtient de bonnes qualités esthétiques, notamment pour le cadre 41, celui-ci étant formé dans le prolongement de la partie fixe, sans qu'il apparaisse de transition.

## Revendications

1. - Dispositif d'obturation d'une baie ménagée dans la carrosserie d'un véhicule, du type comprenant un ensemble fixe (12, 13) destiné à être rapporté sur ladite carrosserie et une partie mobile (14) par rapport à ladite partie fixe (12, 13), pouvant venir obturer ou libérer une ouverture (11) ménagée dans ledit ensemble fixe (12, 13), ladite partie mobile (14) se trouvant dans le même plan que ladite partie fixe (12, 13) lorsque la partie mobile (14) se trouve en position d'obturation,
**caractérisé en ce que** ladite partie fixe (12, 13) présente au moins un élément rigide et solidaire de la partie fixe (22, 41) s'étendant légèrement à l'intérieur de ladite ouverture (11), ledit élément rigide et solidaire de la partie fixe (22, 41) formant une surface d'appui pour ladite partie mobile (14) lorsque celle-ci est en position d'obturation,
ladite partie fixe (12, 13) comprenant un élément rigide de protection et/ou de finition (41), formé sur la face de ladite partie fixe (12, 13) correspondant à l'extérieur du véhicule, et formant une surface d'appui pour ladite partie mobile (14) lorsque celle-ci est en position d'obturation.

2. - Dispositif d'obturation selon la revendication 1, **caractérisé en ce que** ledit élément rigide de protection et/ou de finition (41) forme un cadre autour de ladite ouverture (11).

3. - Dispositif d'obturation selon l'une quelconque des revendications 1 et 2, **caractérisé en ce qu'**au moins un premier élément rigide d'accrochage (22) formé sur la face de ladite partie fixe (12, 13) correspondant à l'intérieur du véhicule, et coopérant avec un second élément d'accrochage (23) prévu à cet effet sur ladite partie mobile (14), lorsque cette dernière est en position d'obturation.

4. - Dispositif d'obturation selon la revendication 3, **caractérisé en ce que** lesdits premier (22) et second (23) éléments d'accrochage viennent s'engrener l'un dans l'autre.

5. - Dispositif d'obturation selon la revendication 4, **caractérisé en ce que** lesdits premier (22) et second (23) éléments d'accrochage réalisent un blocage selon un axe sensiblement vertical, ledit second élément d'accrochage (23) présentant un plan incliné venant s'inscrire dans un logement complémentaire défini par ledit premier élément d'accrochage (22).

6. - Dispositif d'obturation selon la revendication 5, **caractérisé en ce que**, le mouvement de ladite partie mobile (14) étant guidé par deux rails parallèles (16₁,16₂), ledit premier élément rigide d'accrochage (22) est placé sur une portion de ladite partie mobile (14) située entre les portions de ladite partie mobile (14) portant lesdits rails (16₁, 16₂).

7. - Dispositif d'obturation selon l'une quelconque des revendications 5 et 6, **caractérisé en ce que** ladite ouverture (11) est dirigée vers le bas.

8. - Dispositif d'obturation selon l'une quelconque des revendications 1 à 7, **caractérisé en ce qu'**au moins un desdits éléments rigides (22, 41) est formé par moulage, lors de la fabrication de ladite partie fixe (12, 13).

9. - Dispositif d'obturation selon la revendication 8, **caractérisé en ce que** lesdits éléments rigides (22, 41) et les rails de guidage (16₁,16₂) de ladite partie mobile sont réalisés simultanément, par moulage.

10. - Procédé de fabrication d'un dispositif d'obturation d'une baie ménagée dans la carrosserie d'un véhicule, du type comprenant une partie fixe (12, 13) destiné à être rapporté sur ladite carrosserie et une partie mobile (14) par rapport à ladite partie fixe (12, 13), pouvant venir obturer ou libérer une ouverture (11) ménagée dans ladite partie fixe (12, 13), ladite partie mobile (14) se trouvant dans le même plan que ladite partie fixe (12, 13) lorsque ladite partie mobile (14) se trouve en position d'obturation,
**caractérisé en ce qu'**on forme sur ladite partie fixe (12, 13) au moins un élément rigide et solidaire de la partie fixe (22, 41) s'étendant légèrement à l'intérieur de ladite ouverture (11), ledit élément rigide et solidaire de la partie fixe (22, 41) formant une surface d'appui pour ladite partie mobile (14) lorsque celle-ci est en position d'obturation,
ladite partie fixe (12, 13) comprenant un élément rigide de protection et/ou de finition (41), formé sur la face de ladite partie fixe (12, 13) correspondant à l'extérieur du véhicule, et formant une surface d'appui pour ladite partie mobile (14) lorsque celle-ci est en position d'obturation.

11. - Procédé selon la revendication 10, **caractérisé en ce que** le ou lesdits éléments rigides (22, 41) sont formés par moulage.
